# EUROPEAN PATENT APPLICATION

(11) **EP 1 695 610 A1**
(43) Date of publication of application: **30.08.2006**
(21) Application number: 06250754.6
(22) Date of filing: 13.02.2006
(51) Int. Cl.: A01D 34/81, A01D 43/063

(54) **Lawn mower**

(30) Priority: 25.02.2005 GB 0503859
(71) Applicant: GMCA PTY Ltd, Victoria 3045 (AU)
(72) Inventor: Keith Park, Keith Park Associates, York YO42 2QN (GB)
(74) Representative: Tomkinson, Alexandra

(57) **Abstract**

A lawn mower (2) includes a body portion (4) with cutting means associated therewith for cutting grass or vegetation, and handle means (6) for allowing a user to grip and/or steer the mower (2) in use. The lawn mower (2) is movable between an in use condition and a storage condition. In the storage condition, at least part of the body portion (4) of the mower (2) is substantially enclosed within a housing.

## Description

The invention relates to a lawn mower, and particularly to a lawn mower which is used to cut vegetation or grass, such as for example grass forming a lawn.

The provision of lawn mowers is well known and they are typically used at frequent intervals during the growing season to provide a trimming or clipping effect on grass, thereby maintaining a neat appearance of the same. Lawn mowers can be split into two main categories; rotary mowers and hover mowers. Rotary mowers are moved across a surface on wheels, and a rotating blade or blades is/are positioned at a distance offset from the surface over which the wheels pass. The rotation of the blade in combination with movement of the mower provides a cutting action on the grass. Hover mowers also have a rotating blade but rather than wheels being used to support the mower as it passes across the surface, an air cushion is created between the mower and the surface such that the mower can be moved across the surface. Once again the rotation of the blade causes the cutting action on the grass.

A known problem with many hand controlled mowers, whether they be electrically or fuel powered, is that they are only used for part of the year and are required to be stored between uses. The mowers are relatively bulky, especially when provided, as most are, with a grass collection box. Once the mowers are used, they become dirty, typically retaining grass cuttings and debris, the dirt and debris often becoming dropped at the location of storage, thereby creating a mess. A further problem with conventional mowers is at the time of retail of the mowers. The mower body is relatively bulky, and there is also provided the extended handle and grass collection box. It is found that even with the best of efforts to reduce the overall size of the product, the size of the retail pack as defined by the outer cardboard box is such that the same is expensive to transport and to stock and the materials used for the packaging are expensive.

The aim of the present invention is to provide a means whereby the lawnmower can be stored in a more compact form than at present and also be provided in a more advantageous form for retail purposes.

In a first aspect of the invention there is provided a lawn mower, said mower having a body portion with cutting means associated therewith for cutting grass or vegetation and handle means for allowing a user to grip and/or steer the mower in use, said lawn mower movable between an in use condition and a storage condition, and wherein in said storage condition, at least part of the body portion of the mower is substantially enclosed within the housing.

Preferably at least the cutting means are substantially enclosed by said outer housing to mask the same from view and/or external contact. The cutting means typically includes at least one cutting blade.

In one embodiment the body portion, handle means and/or housing are provided with engagement means for allowing the housing to be located thereon when in the storage condition and/or said in use condition.

The engagement means can include any or any combination of one or more clips, screws, ties, inter-engaging members, nuts and bolts, friction fit and/or the like.

In one embodiment the housing includes at least first and second parts defining a cavity therein and at least part of the mower is located in said cavity in the storage condition.

Preferably the at least first and second parts can be moved between open and closed positions to allow at least part of the mower to be located in and removed from the housing.

In one embodiment the first and second parts are hingedly connected to each other to allow the parts to be moved between open and closed positions. The housing is typically hinged at one edge and the parts, when hingedly moved together, can enclose the mower body portion therein, and which when moved apart, can allow the body and the mower to be moved to the in use condition.

In one embodiment the first and second parts are detachably attached to each other using suitable attachment means.

Preferably at least part of the handle means protrudes from the housing when the mower is in the storage condition. The part of the handle means can be used to carry the lawn mower in the storage condition. For example, the handle means may include one or more gripping portions which are used to grip the handle means by a user when the mower is in use. The same gripping portions can be used by a user to carry the mower when in the storage position.

The handle means are typically movable between in use and storage positions and said handle means typically need to be in said storage position to allow the mower to be located in the housing in the storage position. The handle means are typically at least partially or substantially folded in said storage position.

Preferably the handle means are movable to a position wherein at least part of the same are adjacent an underside surface of the mower base in the storage condition. Alternatively the handle means can be moved to a position wherein at least part of the handle means are adjacent and substantially parallel to an upper surface of the body portion.

Preferably the handle means are rotatably mounted to the body portion of the mower to allow the same to be moved between in use and storage conditions. In the in use position, the handle means typically protrude upwardly/outwardly at an acute angle with respect to the body portion of the mower. In the storage condition, at least part of the handle means are typically moved to be substantially parallel to and adjacent the body portion of the mower.

Preferably the handle means includes at least two separate pivot points about which parts of the handle means are movable to allow the same to be moved between the in use condition and the storage or folded condition. The pivot points can include any suitable type of mechanism, such as one or more screws, ratchet mechanism, nuts and bolts, rotatable members, hinges and/or the like.

Locking means can be provided with the handle means and/or pivot points to allow the handle means to be maintained in the in use position or storage positions.

The housing can be provided with one or more wheels or movement means thereon to allow the housing to be wheeled between two locations when the mower is in the storage position. Alternatively, or in addition, one or more wheels, rollers and/or similar can be provided on the mower which protrude from the housing in the storage condition to allow the mower to be wheeled between locations in said storage condition.

In one, and a preferred, embodiment, the housing is usable to enclose the body when in the storage condition and is usable as a grass cuttings collection box when the mower is in the use condition. Thus, when the mower is in the use condition the housing can be selectively mounted to the body portion and/or handle means of the mower to act as a grass collection box. The housing is typically mounted at or adjacent the rear of the body portion of the mower and preferably in communication with an outlet of the body portion from which grass cuttings are emitted such that the grass cuttings are moved into the housing and collected therein.

The interior and/or exterior of the housing can be provided with location means for the storage of one or more items other than the mower, such as one or more accessories and/or spare parts.

In one aspect of the invention there is provided a housing for use in conjunction with a lawn mower.

In one aspect of the invention there is provided a housing, said housing having first and second parts, said housing selectively engaged in a first position with respect to the mower to act as a collector for cuttings generated by use of the mower and wherein the housing is selectively engaged in a second condition so as to define a storage condition of the mower in which at least a portion of the mower body is located within the housing.

According to a further aspect of the present invention there is provided a method of moving a lawn mower between in use and storage conditions, said lawn mower having a body portion with cutting means associated therewith for cutting grass or vegetation and handle means for allowing a user to grip and/or steer the mower in use, said method including the steps of locating at least part of the body portion in a housing to substantially enclose the same in a storage condition and, in the in use condition, removing said at least part of the body portion of the mower from said housing.

By allowing the housing to act as an outer casing for the mower when the same is in storage, the dropping of debris from the mower is prevented as this debris falls into the housing. Furthermore, as the housing can act as a grass collection box, the space which is required for the conventional grass collection box is no longer required, thereby reducing the storage space needed. Furthermore, the invention has uses in the retail environment in that the housing can be used as the outer shell of the retail pack such that the body of the mower and any loose fittings and/or accessories required for the mower can all be stored within the housing. Typically therefore only the handle, or part of the handle, protrudes from the housing although even this may be incorporated into the housing for storage in certain embodiments. In this embodiment the housing itself can be provided with handle means to allow carrying of the product.

As the majority of the components are located within the housing in the storage or retail condition, there is no longer a need for an outer cardboard package as the outer surface of the housing can provide the outer surface of the retail pack, although additional advertising material such as a printed band placed round the housing can be provided if required. Without the need for outer packaging so the cost of the product is reduced, the same is more environmentally friendly and the product is still protected.

Although the invention is regarded as being of particular advantage with respect to a rotary style lawn mower, it should be appreciated that the invention is equally applicable to any form of lawn mower, such as for example a hand pushed and/or hand controlled lawn mower where the user walks along with the mower.

A specific embodiment of the invention is now described with reference to the accompanying drawings; wherein
Figure 1 illustrates a perspective view of a lawn mower in accordance with one embodiment of the invention in an in-use condition;
Figure 2 illustrates the lawn mower of Figure 1 in a storage condition; and
Figures 3a and b illustrate the transition of the lawn mower of Figures 1 and 2 between the storage and in-use conditions.

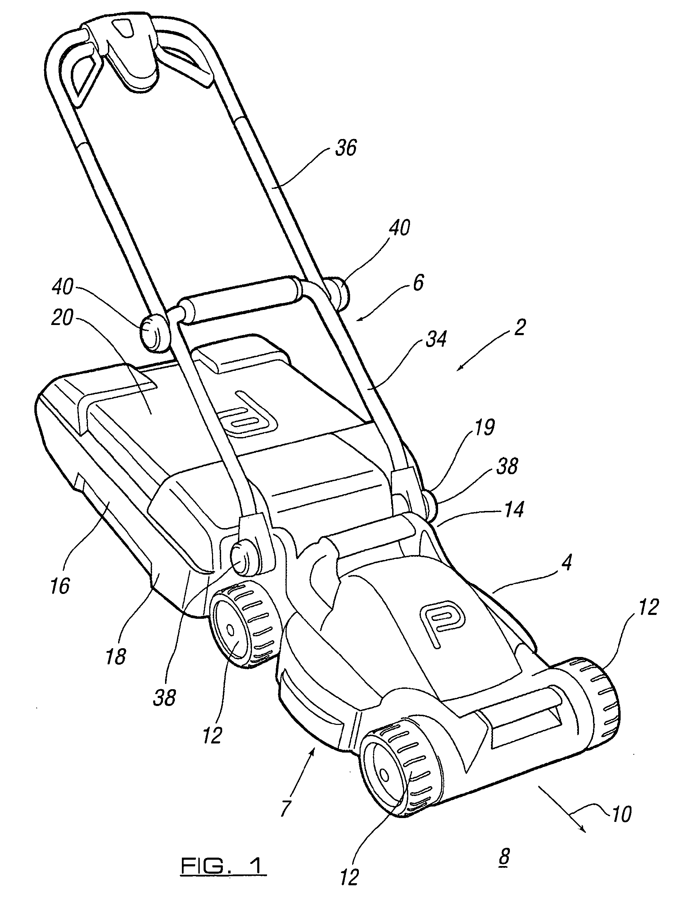

Referring firstly to Figure 1, there is illustrated a lawn mower 2 in accordance with one embodiment of the invention. In Figure 1 the mower is in an in use condition with a body 4 and handle assembly 6 depending upwardly at an angle from the rear of the body. The body has an outer shell which defines a cavity 7 on the underside of the body within which a blade is provided to rotate and cut the grass or other vegetation of the surface 8 over which the body passes, typically in the direction 10. In this embodiment the mower is a rotary mower such that wheels 12 are provided on the body to support the same at the required height with respect to the surface 8. The height of the body and/or blade can typically be adjusted. At the rear 14 of the body there is provided an opening (not shown) via which cut grass and vegetation leaves the cavity and enters into a housing 16 connected to the rear of the body and acting as a cuttings collector. The connection can be by any suitable releasable engagement means such as clips. The collector is formed by the housing, typically formed of two parts 18,20 which can be moved together to form the collector into which the cuttings pass via an opening in one of the walls of the housing connected or in communication with an outlet of the body as indicated by arrow 19.

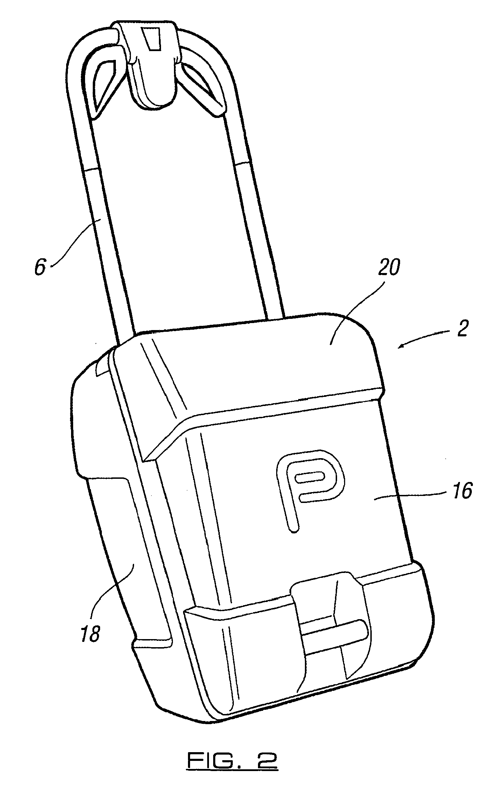

Figure 2 illustrates the mower 2 in a storage condition which can also be used as an initial retail pack. In this form the body 4 is not visible as it is enclosed within the housing 16 such that the same is wholly or substantially hidden from external view. The cavity of the body is enclosed within the housing thereby preventing, after initial use, debris such as cut grass from falling from the cavity wall and causing a mess during storage. This can allow the lawnmower to be stored within a house without creating a mess which can be useful where external storage space is limited. In this arrangement the handle assembly 6 is moved to a folded condition with the same being used as a carry handle thereby allowing the same to be moved to and from storage location either by carrying or via wheels which protrude from the housing (not shown) and allow the movement across the surface.

When used in a retail condition a further advantage is that all fittings, spare parts, paper work for the mower can be stored within the housing 16 and hence there is no need for an outer cardboard or other outer packaging to be provided and the unit can be sold as shown in Figure 2, with perhaps the addition of pricing or usage information to make the external appearance more visually attractive to a potential customer. The housing is typically a substantially rigid shell so as to provide some level of protection for the mower when in the storage condition.

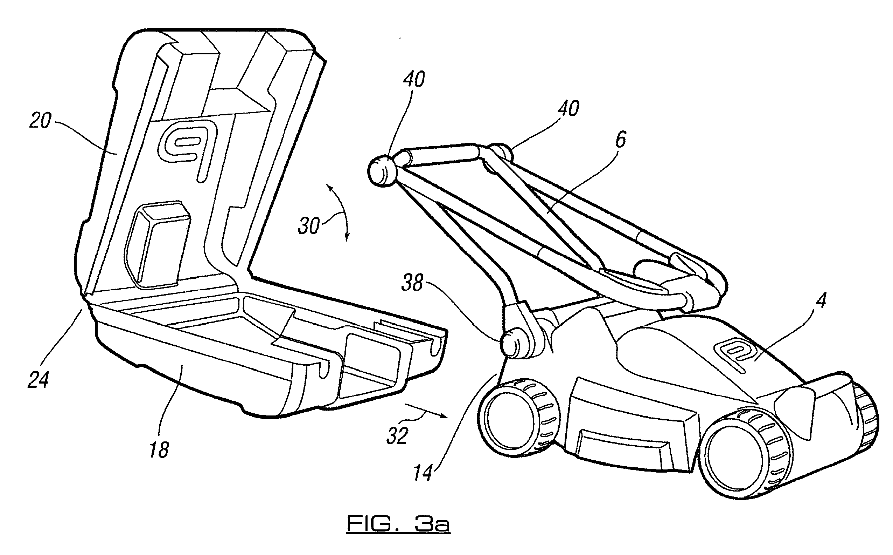

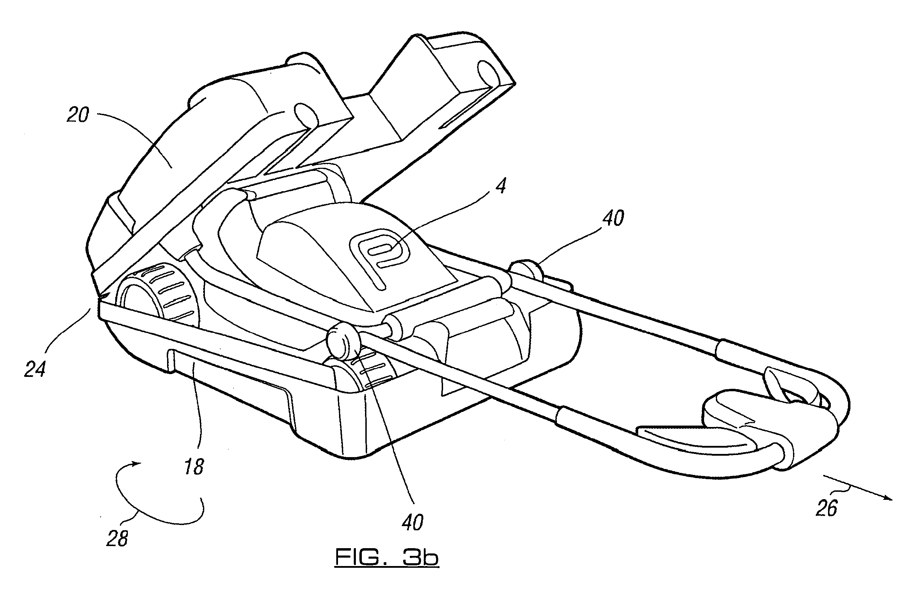

Figures 3a and b illustrate the manner in which the lawn mower of Figures and 1 and 2 can be moved between the respective conditions. It will be seen that to move the same from one condition to the other the parts 18, 20 of the housing 16 are moved apart, typically via the hinge 24 at one edge. When it has been used as a cuttings collector, the housing is first emptied or is taken to a location for depositing the cuttings before moving the parts 18, 20 apart. Once moved apart, if changing from a storage or retail condition to in use condition, the body 4 is removed from the housing 16 as illustrated by arrow 26 in Figure 3b and the mower body and handle is then turned as indicated by arrow 28 in Figure 3b to the position with respect to the housing 16 shown in Figure 3a. The housing parts 18,20 can then be brought together as indicated by arrow 30 as the housing 16 is attached to the rear 14 of the body 4 as indicated by arrow 32 and hence is positioned and engaged at the rear of the body.

If changing condition in the reverse direction, the housing is removed and the parts moved apart such that the body is placed into the open housing and the two parts 18,20 are brought together to enclose the same.

In the illustrated embodiment, the handle assembly 6 includes two parts, a lower part 34 and an upper part 36. The lower part 34 is rotatably mounted to the rear of the mower body 4 and locking means in the form of rotatable knobs 38 lock the ends of the lower part 34 in a suitable position in use. The upper part 36 is rotatably mounted to the lower part 34 via rotatable knobs 40. As such, the handle means can be folded to allow the same to be moved from an extended position, as shown in figure 1, to a partially folded condition, as shown in figure 3a. Alternatively, the handle means can remain partially or fully extended, as shown in figure 3b, but can be moved from an in use position, wherein the handle means protrude at an acute angle upwardly with respect to the body of the mower, to a storage position, wherein the handle means are provided substantially parallel to and adjacent the body portion of the mower. A portion of the upper part 36 of the handle means can protrude from the housing to allow the housing to be carried. Apertures can be provided in the housing to allow the handle means to protrude therefrom.

The present invention therefore provides a unique and useful way in which to utilise at least one of the required components of a lawn mower in two ways to advantage and at the same time allow savings in space and cost to be achieved by the manufacturer, retailer and end user.

## Claims

1. A lawn mower, said mower having a body portion with cutting means associated therewith for cutting grass or vegetation and handle means for allowing a user to grip and/or steer the mower in use, said lawn mower movable between an in use condition and a storage condition, and wherein in said storage condition, at least part of the body portion of the mower is substantially enclosed within the housing.

2. A lawn mower according to claim 1 wherein at least the cutting means are substantially enclosed by said housing.

3. A lawn mower according to claim 1 wherein the housing can be arranged with respect to the mower to act as a grass collection box when the mower is in use.

4. A lawn mower according to claim 1 wherein engagement means are provided on the housing, handle means and/or body portion to allow the housing to be located with respect to the mower in said storage condition and/or in use condition.

5. A lawn mower according to claim 4 wherein the engagement means can include any or any combination of one or more clips, screws, ties, inter-engaging members, nuts and bolts, or friction fit.

6. A lawn mower according to claim 1 wherein the housing includes at least first and second parts defining a cavity therebetween and said parts can be moved between open and closed positions to allow at least part of the body portion of the mower to be located in said housing cavity in said storage condition.

7. A lawn mower according to claim 6 wherein the first and second parts are hingedly connected to each other to allow the parts to be moved between said open and closed positions.

8. A lawn mower according to claim 6 wherein the first and second parts are detachably attached to each other to allow the parts to be moved between said open and closed positions.

9. A lawn mower according to claim 1 wherein at least part of the handle means protrudes from the housing when in said storage condition.

10. A lawn mower according to claim 9 wherein said at least handle means part protruding from said housing is used to carry the lawn mower in the storage condition.

11. A lawn mower according to claim 1 wherein the housing is provided with one or more wheels thereon and/or one or more wheels associated with the body portion of the mower protrude from said housing in the storage condition to allow transport of the housing in said storage condition.

12. A lawn mower according to claim 1 wherein the housing is selectively mounted on or adjacent a rear of the mower when the mower is in use.

13. A lawn mower according to claim 12 wherein the housing is provided in communication with an outlet of the body portion of the grass from which grass cuttings are emitted in use of the mower.

14. A lawn mower according to claim 1 wherein the handle means are movable between an in use position and a storage position and said handle means are required to be in said storage position in order to locate at least part of said mower in said housing.

15. A lawn mower according to claim 14 wherein the handle means are partially or substantially folded in said storage position.

16. A lawn mower according to claim 14 wherein the handle means are rotatably mounted to the body portion of the mower to allow the same to be moved between the in use position and said storage position.

17. A lawn mower according to claim 14 wherein at least part of the handle means protrude at an acute angle outwardly of said body portion of the mower in the in use position and said at least part of said handle means is provided substantially parallel and adjacent to said body portion in said storage position.

18. A lawn mower according to claim 14 wherein the handle means includes at least two separate pivot points about which the handle means are movable to move the same between said in use position and said storage position.

19. A lawn mower according to claim 1 wherein the housing includes location means for the storage of one or more accessories and/or items associated with the mower.

20. A housing for use with a lawn mower according to claim 1.

21. A method of moving a lawn mower between in use and storage conditions, said lawn mower having a body portion with cutting means associated therewith for cutting grass or vegetation and handle means for allowing a user to grip and/or steer the mower in use, said method including the steps of locating at least part of the body portion in a housing to substantially enclose the same in a storage condition and, in the in use condition, removing said at least part of the body portion of the mower from said housing.
